# EUROPEAN PATENT APPLICATION

(11) **EP 3 546 076 A2**
(43) Date of publication of application: **02.10.2019**
(21) Application number: 19160776.1
(22) Date of filing: 05.03.2019
(51) Int. Cl.: B08B 3/02, B60S 3/04

(54) **SANITIZING MACHINE FOR SUPERMARKET CARS**

(30) Priority: 05.03.2018 IT 201800002017 U
(71) Applicant: Papa, Nicola, 00048 Roma (IT); Papa, Massimo, 00048 Nettuno (IT)
(72) Inventor: Papa, Nicola, 00048 NETTUNO Roma (IT); Papa, Massimo, 00048 NETTUNO Roma (IT)
(74) Representative: Cioncoloni, Giuliana

(57) **Abstract**

A machine for the sanitation of supermarket cars (C) comprising a box structure (1), equipped with an entrance ramp (2) and an exit ramp (3), an electric system, a steam generator (7), a steam distribution system (10) with nozzles (25), a conveyor belt (14) driven by a gear motor (15, 16), a condensation collection tank (17) under the conveyor belt (14), cart (C) guiding elements (19) located facing each other on the inner sides of the box structure (1), cart (C) stop bars (20) arranged transversely on each entrance ramp (2) and exit ramp (3) and on the conveyor belt (14), light (21) and sound (22) alarms and at least one cart presence sensor (23) with a switch.

## Description

The present invention relates to a machine for the sanitation of supermarket carts. It should be understood that with supermarket we mean any shopping centre equipped with shopping carts given in use to the costumers to transport the purchased products to the cash registers and, eventually, also to their means of transportation.

According to international studies, supermarket carts get dirty while being used acquiring bacterial charges up to eight times the allowed limits, a level comparable to a public toilette. This phenomenon is not related to an incorrect supervision of the problem by the management of shopping centres, but to the absence of an adequate cleaning system able to optimize technological means and resources used.

An approximate sanitization and sanitation of the supermarket carts cause proliferation of staphylococci aureus, faecal streptococci, enterobacteria, Aspergillus spp., indoor dust allergens (mites, molds, cockroaches).

Health effects are bacterial infections (scarlet fever, otitis, pharyngitis), viral infections (chicken pox, measles, rubella, mumps, flu, mononucleosis, colds, allergy, scabies, dermatosis, legionella). Legionella, which occurs in 15-20% of cases, can cause pneumonia with a high mortality rate.

The object of the present invention is to provide sanitization and sanitation of the shopping carts.

The object is reached with the present invention as defined by the appended claims.

Further characteristics and advantages of the invention will be more apparent from the description of the machine for the sanitation of supermarket carts illustrated in the combined drawings in which:
- Figure 1 is a schematic longitudinal section of the machine for the sanitation of supermarket carts according to the invention;
- Figure 2 is an end view from the right side of Figure 1; and
- Figure 3 is a functional block diagram of the machine.

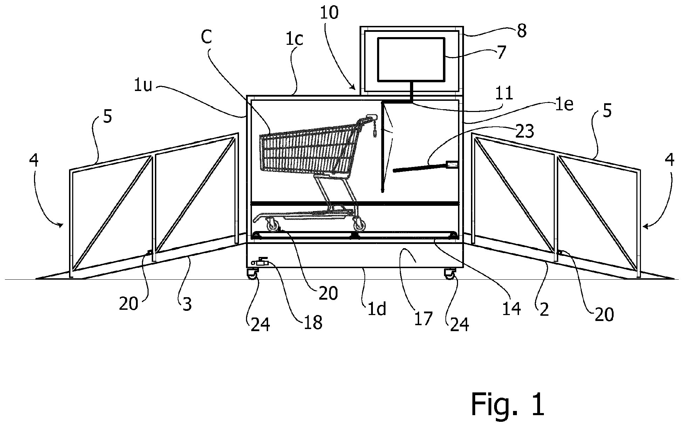

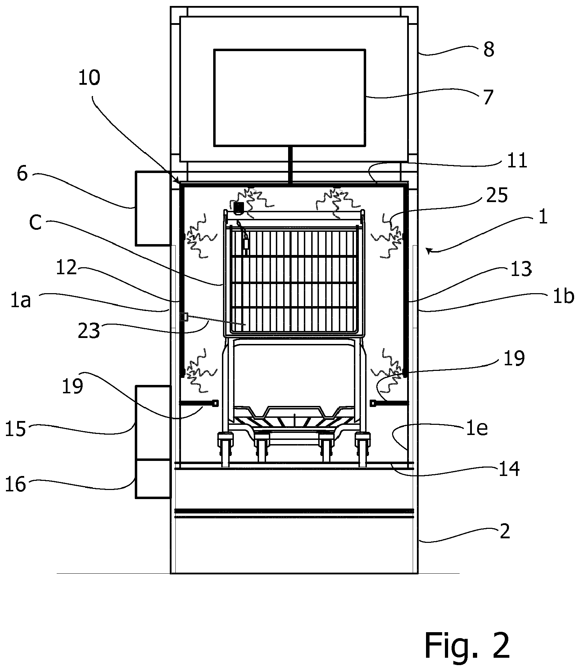

Refer initially to the Figures 1 and 2, which are a schematic longitudinal section of the machine for the sanitation of supermarket carts according to the invention and an end view of the same from the right side. The machine has a box structure 1, like that one of a chest, with side walls 1a and 1b, a peak 1c, a bottom 1d, an open anterior end 1e connected to an entrance ramp 2 and an open posterior end 1u connected to an exit ramp 3. The entrance ramp 1e and the exit ramp 1u have railings and handrails indicated respectively with 4 and 5. With C the cart to sanitize is indicated.

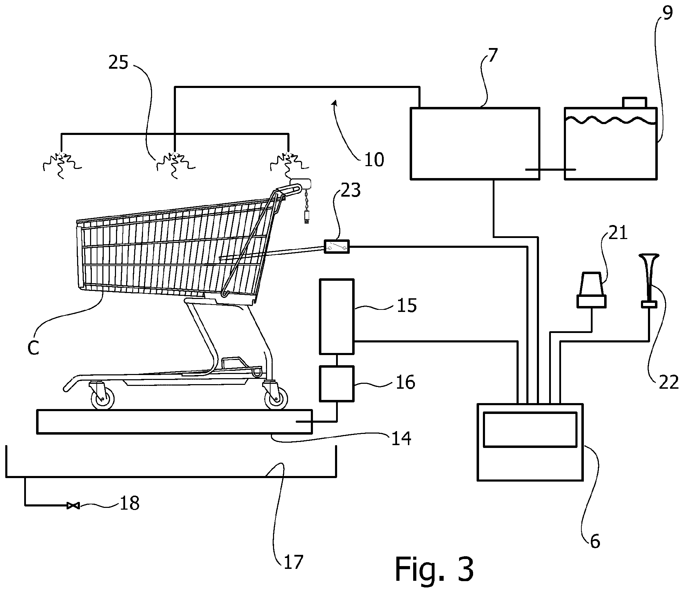

An electrical system equipped with an electrical cabinet 6 (Figure 2) is provided. The system powers a steam generator 7 schematically represented with a block placed in a container 8 on the peak 1c on the outside of the box structure 1. As shown in the Figure 3, which is a functional block diagram of the machine, the steam generator 7 is connected on one side to a washing liquid tank (9) and on the other side to a steam distribution system located on the inside of the box structure 1 and overall indicated with 10, better viewed in Figure 1 and 2.

The steam distribution system 10 has an upper transverse arm 11, on the inside of the box structure 1 and parallel to its peak 1c, and a pair of vertical arms 12, 13 in continuation of the upper transverse arm 11 and adjacent to the side walls 1a, 1b.

A conveyor belt 14 is located parallel to the bottom 1d of the box structure 1, at the level of the entrance ramp 2 and the exit ramp 3 on the anterior end 1e and posterior end 1u of the box structure 1. The conveyor belt 14 being moved by a motor 15 through a reducer 16.

A condensation collection tank 17 is provided in between the conveyor belt 14 and the bottom 1d of the box structure 1. The collection tank 17 being equipped with a drain valve 18.

Cart C guiding elements 19 are located facing each other on the inner sides of the side walls 1a, 1b of the box structure 1.

Cart C stop bars, generally indicated with 20, are arranged transversely on each one of the entrance 2 and exit 3 ramps and on the conveyor belt 14.

A light 21 alarm and a sound 22 alarm indicate that the machine is in function, and in particular that the conveyor belt 14 is in movement.

At least one sensor 23 indicates the presence of the cart C and interrupts the progress of the conveyor belt 14 through a switch.

The dimension in height of the box structure 1, in particular the distance between the conveyor belt 14 and its peak 1c, is greater enough then the height of the cart C.

Advantageously, the box structure 1 is mounted on wheels generically indicated with 24 (Figure 1).

Preferably, the box structure 1 is made of self-supporting aluminium section bars and the walls 1a, 1b are composed of expanded polyurethane panels finished with aluminium sheeting. A structure composed in this manner can be easily disassembled. The condensation collection tank 17, of adequate capacity, can be directly connected to the sewerage network through the drain valve 18. Thanks to the presence of the wheels 24, when the collection tank 17 is full, the box structure 1 can be easily moved to a discharge point.

The fact of providing on the two ramps 2 and 3 of railing 4 totally removable makes the use of the machine easier.

Thanks to the conveyor belt 14, an operator can leave a cart C on the entrance ramp 2, being its posterior wheels held by the bar 20. Automatically the cart C is transported to the inside of the box structure 1 where the sanitation process begins, which is started by the cart C itself through the switch of the sensor 23. A jet of steam with a dose of washing liquid coming from the tank 9 is nebulized through the nozzles 25 provided on the upper transversal arm 11 on the inside of the box structure 1 and parallel to its peak 1c, and on the vertical arms 12, 13 in continuation of the upper transversal arm 11. The nozzles 25 face the inside of the box structure 1 toward the cart C.

The cart C is guided to the exit ramp 3 after a predetermined amount of time, for example about 1 minute, totally sanitized, ready for use.

The electrical cabinet 6 installed on the box structure 1 distributes the electrical energy to the steam generator 7, to the motor 15 of the conveyor belt and to the light 18 and sound 19 alarms which alert the operator that the machine is in function, in particular that the conveyor belt is in movement.

The steam distribution is activated by the sensor 23 a micro-switch that allows the distribution of the steam only when the presence of a cart C to be sanitized is detected.

When the sensor 23 does not detect any cart, the steam generator 7 remains on hold until a new activation.

As an example, the absorbed power is 2.000 W and the maximum steam pressure is 0,35 megapascal (MPa).

## Claims

1. A machine for the sanitation of supermarket carts (C) characterized for comprising
▪ a box structure (1), having side walls (1a, 1b), a peak (1c), a bottom (1d), an open anterior end (1e) connected to an entrance ramp (2) and an open posterior end (1u) connected to an exit ramp (3), having the entrance ramp (2) and the exit ramp (3) railings (4) with handrails (5);
▪ an electric system, equipped with an electrical cabinet (6);
▪ a steam generator (7), located on the peak (1c) on the exterior of the box structure (1) connected on one side to a washing liquid tank (9) and on the other side to a steam distribution system (10), equipped with nozzles (25), and located on the interior of the box structure (1);
▪ a conveyor belt (14) located parallel to said bottom (1d) and at the entrance (2) and exit (3) ramps on the anterior (1e) and exterior (1u) ends of the box structure (1), the conveyor belt (14) being moved by a gearmotor (15, 16);
▪ a condensation collection tank (17) between the conveyor belt (14) and the bottom (1d) of the box structure (1), the collection tank (17) being equipped with a drain valve (18);
▪ cart (C) guiding elements (19) located facing each other on the inner sides of the side walls (1a, 1b) of box structure (1);
▪ cart (C) stop bars (20) arranged transversely on each entrance ramp (2) and exit ramp (3) and on the conveyor belt (14);
▪ light (21) and sound (22) alarms which indicate that the machine is in function;
▪ at least one cart presence sensor (23) with a switch.

2. Machine according to the Claim 1, in which the box structure (1) is mounted on wheels (24).

3. Machine according to the Claim 1, in which a steam distribution system (10) has an upper transverse arm (11), inside the box structure (1) and parallel to its peak (1c), and a pair of vertical arms (12, 13) in continuation of the upper transverse arm (11), the arms (11, 12, 13) being equipped with nozzles (25) facing the inside.
